# EUROPÄISCHE PATENTSCHRIFT

(11) **EP 3 574 626 B1**
(45) Veröffentlichungstag und Bekanntmachung des Hinweises auf die Patenterteilung: **23.09.2026**
(21) Anmeldenummer: 18707277.2
(22) Anmeldetag: 13.02.2018
(51) Int. Cl.: H04W 4/48, H04W 4/42, H04L 12/46, H04L 9/40

(54) **VERFAHREN UND VORRICHTUNGEN ZUR ÜBERTRAGUNG VON DATEN ZWISCHEN EINEM ERSTEN NETZ UND EINEM ZWEITEN NETZ EINES SCHIENENFAHRZEUGS**
METHOD AND DEVICES FOR TRANSMITTING DATA BETWEEN A FIRST NETWORK AND A SECOND NETWORK OF A RAIL VEHICLE
PROCÉDÉ ET DISPOSITIFS POUR LA TRANSMISSION DE DONNÉES ENTRE UN PREMIER RÉSEAU ET UN DEUXIÈME RÉSEAU D'UN VÉHICULE FERROVIAIRE

(30) Priorität: 09.03.2017 DE 102017203898
(43) Veröffentlichungstag der Anmeldung: 04.12.2019
(73) Patentinhaber: Siemens Mobility GmbH, 80997 München (DE)
(72) Erfinder: BRAUN, Thorsten, 91088 Bubenreuth (DE)
(74) Vertreter: Siemens Patent Attorneys
(86) Internationale Anmeldenummer: PCT/EP2018/053491
(87) Internationale Veröffentlichungsnummer: WO 2018/162176

(56) Entgegenhaltungen:
- EP-A1- 1 065 128
- US-A1- 2010 098 095
- US-A1- 2015 254 909
- US-A1- 2016 301 714

## Beschreibung

Die Erfindung betrifft eine Gateway-Vorrichtung, ein Kommunikationsverfahren sowie ein Kommunikationssystem und ein ein Schienenfahrzeug. Gateway-Vorrichtungen sind grundsätzlich bekannt zur Verbindung von Netzen, insbesondere Datennetzen, welche auf unterschiedlichen Netzwerkprotokollen basieren.

Eine Lösung zur Verbindung eines ersten und zweiten Netzes ist in der DE 10 2015 108 109 A1 beschrieben. Dabei wird zur unidirektionalen Übertragung von Daten in einer Anlage, welche ein erstes und ein zweites Netz umfasst, zwischen einem Sender des ersten Netzes und einem Empfänger des zweiten Netzes eine Datendiode geschaltet.

DE 10 2010 052 486 B4 beschreibt eine Lösung für eine Übertragung von Daten zwischen einem für die Sicherheit des Fahrzeugs und seiner Passagiere relevanten System (insbesondere die Fahrzeugsteuerung) und einem fahrzeugextern ansteuerbaren Reisenden-Informationssystem.

EP 1 065 128 A1 beschreibt ein Datenkommunikationssystem im Zug mit einem Zugbus zur Kommunikation zwischen Fahrzeugen des Zuges und mit jedem Fahrzeug zugeordneten internen Fahrzeugbussystemen. Innerhalb des Zuges sind wenigstens zwei Master-Fahrzeugbussysteme vorhanden, wobei eines der Master-Fahrzeugbussysteme bei einer Initialisierung (Zugtaufe) des Datenkommunikationssystems als aktiver Master schaltbar ist und alle Steuerfunktionen des Zuges übernimmt. Slave-Fahrzeugbussysteme sind über die Systemkomponenten zur Steuerung des Zuges ansteuerbar. Die Fahrzeugbussysteme sind über jeweils ein Gateway mit dem Zugbus gekoppelt. Die Gateways umfassen ein Schaltmittel, mit dem der Zugbus auftrennbar beziehungsweise schließbar ist. Bei der Initialisierung (Zugtaufe) des Datenkommunikationssystems sind alle Gateways zunächst in einen Taufzustand bringbar. Nachdem alle Gateways des Zuges den getauften Zustand besitzen, erfolgt die Initialisierung des Zuges, so dass alle Mastersysteme die Initialisierungsinformationen mithören können.

Vor diesem Hintergrund ist es Aufgabe der Erfindung eine sichere Übertragung von Daten zwischen einem ersten Netz und einem zweiten Netz zu verbessern. Die Erfindung ist durch die beiliegenden unabhängigen Ansprüche definiert.

Diese Aufgabe wird gelöst durch eine Gateway-Vorrichtung für ein Schienenfahrzeug, welche ausgebildet ist, eine Übertragung von Daten zwischen einem ersten Netz des Fahrzeugs und einem zweiten Netz des Fahrzeugs in Abhängigkeit eines Fahrzeugzustands zu steuern.

Die Erfindung beruht auf der Erkenntnis, dass bei einer Verbindung zweier Netze mittels einer Datendiode lediglich eine Übertragung von Daten in einer Richtung möglich ist. Bei bestimmten Netzwerkkonfigurationen, insbesondere wenn das zweite Netz vor einer unerwünschten Übertragung von Daten aus dem ersten Netz geschützt werden soll, ist eine Flexibilität bei der Übertragung von Daten dahingehend wünschenswert, dass bestimmte Daten in beide Richtungen (d. h. von dem ersten Netz zu dem zweiten Netz oder von dem zweiten Netz zu dem ersten Netz) übertragen werden können. Inwieweit eine Übertragung von Daten in die eine oder andere Richtung zugelassen werden soll, wird erfindungsgemäß in Abhängigkeit des Fahrzeugzustands gesteuert. Auf diese Weise wird die Flexibilität bei der Übertragung von Daten zwischen dem ersten und zweiten Netz erhöht. So können bestimmte Daten in einem vorbestimmten Fahrzeugzustand von dem ersten Netz in das zweite Netz übertragen werden, welche in einem anderen Fahrzeugzustand nicht für eine Übertragung von dem Betreibernetz an das Steuernetz zugelassen werden (Mit anderen Worten: Datenflüsse, die in einem vorbestimmten Fahrzeugzustand erlaubt sind, werden in einem andere Fahrzeugzustand unterbunden). Die Kopplung der Datenübertragung an den Fahrzeugzustand stellt dabei eine Hürde dar, die eine ausreichende Sicherheit für das zu schützende Netz sicherstellt.

Das erste und zweite Netz sind vorzugsweise jeweils als Kommunikations- oder Datennetz ausgebildet.

Erfindungsgemäß umfasst das erste Netz ein Betreibernetz und das zweite Netz ein Steuernetz.

Das Steuernetz ist ein Netz, welches eine oder mehrere Komponenten zur Fahrzeugsteuerung umfasst. Dieses Verständnis basiert auf der Kenntnis, dass in heutigen Schienenfahrzeugen - neben den klassischen leittechnischen (z.B. antriebs- und bremstechnischen) Funktionen - zahlreiche Aufgaben automatisiert durchgeführt werden. Dazu gehören z.B. der Betrieb und die Verwaltung eines Systems zur Ausgabe von Informationen an Fahrgäste und Bordpersonal, der automatisierte Betrieb einer Sanitärzelle, die Verwaltung einer Kommunikation zwischen dem Schienenfahrzeug und der Landseite, etc. Die entsprechenden Komponenten sind steuerungs- und kommunikationstechnisch über das Steuernetz miteinander verbunden.

Das Betreibernetz ist ein physikalisch und/oder logisch von dem Steuernetz getrenntes Netz. Beispielsweise ist das Fahrgastinformationssystem (FIS) und/oder das Kameraüberwachungssystem zur Überwachung des Innen- und Außenbereichs des Schienenfahrzeugs (CCTV: Closed Circuit Television) an das Betreibernetz datentechnisch angebunden. Die entsprechenden Komponenten des FISs bzw. Kameraüberwachungssystems sind kommunikationstechnisch über das Betreibernetz miteinander verbunden.

Das dieser Ausführungsform zugrunde liegende Problem ergibt sich aus dem Wunsch, Datenflüsse zwischen dem Steuernetz und dem Betreibernetz zu ermöglichen. Eine derartige Übertragung von Daten ist trotz der physikalischen und/oder logischen Trennung erforderlich, da Funktionseinheiten des Betreibernetzes für deren Betrieb leittechnische Daten aus dem Steuernetz einerseits benötigen und das Steuernetz Zustandsdaten von Funktionseinheiten des Betreibernetzes andererseits sammelt und auswertet. Ein Beispiel kann die Anzeige der Zuggeschwindigkeit auf einer Anzeige des Fahrgastinformationssystems sein. Ein weiteres Beispiel kann die Sammlung von Diagnosedaten von Betreibernetz-Funktionseinheiten durch eine an das Steuernetz angeschlossene Einheit sein. Eine solche Einheit kann ein System-Server sein (z.B. SP SR: SIBAS PN Systemserver; SIBAS PN: SIBAS Profinet; SIBAS: Siemens Bahnautomatisierungssystem).

Erfindungsgemäß ist das Fahrzeug ausgebildet, als Fahrzeugzustand zumindest einen Wartungszustand, welcher für eine Wartung des Fahrzeugs vorgesehen ist, und einen Betriebszustand, welcher für einen Betrieb des Fahrzeugs vorgesehen ist, einzunehmen, wobei die Gateway-Vorrichtung ausgebildet ist, die Übertragung vorbestimmter Daten von dem Betreibernetz zu dem Steuernetz ausschließlich in einem Wartungszustand zuzulassen. Das Fahrzeug ist vorzugsweise in der Lage - neben dem Betriebszustand und Wartungszustand - weitere Zustände einzunehmen, beispielsweise einen Inbetriebnahme-Zustand und/oder einen Abstell-Zustand.

Bei einer weiteren bevorzugten Weiterbildung ist die Gateway-Vorrichtung ausgebildet, eine Zustandsinformation, welche für den Fahrzeugzustand repräsentativ ist, von dem Steuernetz zu empfangen und eine Übertragung auf Basis der Zustandsinformation zu steuern. Vorzugsweise wird die Zustandsinformation von einem Server des Steuernetzes ausgesendet und mittels der Gateway-Vorrichtung empfangen. Weiter vorzugsweise ist die Gateway-Vorrichtung ausgebildet, die Zustandsinformation ausschließlich von dem Steuernetz zu empfangen. Eine von dem Betreibernetz empfangene Zustandsinformation wird dann nicht berücksichtigt. Dies hat den Vorteil, dass ein Angriffsversuch auf Basis einer von Dritten erzeugten Zustandsinformation aus dem Betreibernetz vermieden werden kann.

Bei einer weiteren bevorzugten Ausführungsform umfasst die erfindungsgemäße Gateway-Vorrichtung eine erste Firewall-Einheit, welche für eine dem Betreibernetz zugewandte Datenschnittstelle vorgesehen ist und welche ausgebildet ist, Daten, die für eine Übertragung von dem Betreibernetz zu dem Steuernetz vorgesehen sind, anhand eines ersten Firewall-Regelsatzes weiterzugeben oder zu verwerfen und/oder eine zweite Firewall-Einheit, welche für eine dem Steuernetz zugewandte Datenschnittstelle vorgesehen ist und welche ausgebildet ist, Daten, die für eine Übertragung von dem Steuernetz zu dem Betreibernetz vorgesehen sind, anhand eines zweiten Firewall-Regelsatzes weiterzugeben oder zu verwerfen.

Mit anderen Worten: Die erste und/oder zweite Firewall-Einheit dient zum Filtern von Daten, die an der jeweiligen Datenschnittstelle eingehen. Die Datenschnittstelle ist vorzugsweise als Ethernet-Schnittstelle ausgebildet. Die erste bzw. zweite Firewall-Einheit ist vorzugsweise ausgebildet, den ersten bzw. zweiten Firewall-Regelsatz bei Inbetriebnahme des Fahrzeugs zu laden. Weiter vorzugsweise weist die jeweilige Firewall-Einheit vor der Inbetriebnahme einen Firewall-Regelsatz auf, welcher ausschließlich für eine Übertragung von Daten im Rahmen der Inbetriebnahme geeignet ist.

Gemäß einer weiteren bevorzugten Ausführungsform umfasst die erfindungsgemäße Gateway-Vorrichtung eine Eingriffserkennungseinheit, welche ausgebildet ist, zumindest Daten, die für eine Übertragung von dem Betreibernetz an das Steuernetz vorgesehen sind, zu überwachen. Die Eingriffserkennungseinheit ist vorzugsweise als Intrusion-Detection-System ausgebildet und dient zum Erkennen von Angriffen, Missbrauchsversuchen und/oder Sicherheitsverletzungen, die das Steuernetz betreffen. Das Überwachen umfasst vorzugsweise ein Protokollieren von Ereignissen, Erstellen und Absenden von Werkstattmeldungen und/oder Erstellen und Absenden von betrieblichen Meldungen. Das Überwachen umfasst weiter vorzugsweise ein Filtern bzw. Verwerfen von Daten, wenn die Daten vorgegebene Eigenschaften und/oder Vorgaben nicht erfüllen. Weiter vorzugsweise ist die Eingriffserkennungseinheit ausgebildet, Daten, die für eine Übertragung von dem Steuernetz zu dem Betreibernetz vorgesehen sind, zu überwachen (hierbei dient die Eingriffserkennungseinheit zum Erkennen von Angriffen, Missbrauchsversuchen und/oder Sicherheitsverletzungen, die das Betreibernetz betreffen).

Nach einer weiteren bevorzugten Ausführungsform umfasst die erfindungsgemäße Gatewayvorrichtung eine Eingriffsverhinderungseinheit, welche ausgebildet ist, eine Übertragung von Daten, die für einen unerwünschten Zugriff auf das Steuernetz vorgesehen sind, zu verhindern. Die Eingriffsverhinderungseinheit ist vorzugsweise als Intrusion-Prevention-System (IPS) ausgebildet und dient zum Verhindern von Angriffen, Missbrauchsversuchen und/oder Sicherheitsverletzungen, die das Steuernetz betreffen. Das Verhindern der Übertragung erfolgt vorzugsweise, indem Daten, die eine vorbestimmte Eigenschaft und/oder Vorgabe nicht erfüllen, gefiltert bzw. verworfen werden. Die Eingriffsverhinderungseinheit ist weiter vorzugsweise ausgebildet, eine Übertragung von Daten, die aus dem Steuernetz stammen und für einen unerwünschten Eingriff in das Betreibernetz vorgesehen sind, zu verhindern.

Vorzugsweise werden Eingriffserkennungseinheit und Eingriffsverhinderungseinheit von einer gemeinsamen Komponente der Gateway-Vorrichtung gebildet. Weiter vorzugsweise bildet die Eingriffserkennungseinheit ein Element der Eingriffsverhinderungseinheit. Was die Funktionen angeht, umfasst die Eingriffsverhinderungseinheit die Funktionen der Eingriffserkennungseinheit und stellt - neben dem Überwachen von Daten - auch Funktionen zur Verhinderung einer Übertragung von Daten zu Verfügung.

Gemäß einer weiteren bevorzugten Ausführungsform ist die Eingriffserkennungseinheit ausgebildet, das Überwachen anhand eines ersten Erkennungsregelsatzes auszuführen, und/oder die Eingriffsverhinderungseinheit ausgebildet, das Verhindern anhand eines ersten Verhinderungsregelsatzes auszuführen.

Gemäß einer weiteren bevorzugten Ausführungsform umfasst die erfindungsgemäße Gatewayvorrichtung eine Begrenzungseinheit, welche ausgebildet ist, einen Datenverkehr zwischen dem Betreibernetz und dem Steuernetz zu begrenzen. Den Begriff "Datenverkehr" (welcher fachmännisch häufig auch als Traffic bezeichnet wird) versteht der Fachmann vorzugsweise als eine pro Zeiteinheit übertragene Datenmenge. Die Begrenzungseinheit ist weiter vorzugsweise ausgebildet, einen aus dem Betreibernetz stammenden Datenverkehr, welcher für die Übertragung an das Steuernetz vorgesehen ist, zu begrenzen. Die Begrenzungseinheit stellt sicher, dass die Übertragung von Daten an das Steuernetz unter dem Gesichtspunkt einer maximalen Bandbreite und/oder eines Bursts erzielt wird. Die Begrenzungseinheit ist weiter vorzugsweise ausgebildet, einen aus dem Steuernetz stammenden Datenverkehr, welcher für die Übertragung an das Betreibernetz vorgesehen ist, zu begrenzen.

Bei einer weiteren bevorzugten Weiterbildung umfasst die Gatewayvorrichtung eine Fahrzeugzustand-Verwaltungseinheit, welche ausgebildet ist, der ersten Firewall-Einheit der vorstehend beschriebenen Art einen dritten Firewall-Regelsatz in Abhängigkeit des Fahrzeugzustands bereitzustellen, der Eingriffserkennungseinheit der vorstehend beschriebenen Art einen zweiten Erkennungsregelsatz in Abhängigkeit des Fahrzeugzustands bereitzustellen und/oder der Eingriffsverhinderungseinheit der vorstehenden beschriebenen Art einen zweiten Verhinderungsregelsatz in Abhängigkeit des Fahrzeugzustands bereitzustellen.

Die Verwendung der Fahrzeugzustands-Verwaltungseinheit hat den Vorteil, dass individuelle Wünsche eines Betreibers der Fahrzeuge berücksichtigt werden können, indem entsprechend angepasste Regelsätze für die Firewall-Einheit, die Eingriffserkennungseinheit und/oder Eingriffsverhinderungseinheit auf die Fahrzeugzustand-Verwaltungseinheit geladen werden.

Gemäß einer weiteren bevorzugten Weiterbildung ist die erste Firewall-Einheit ausgebildet, auf Basis des dritten Firewall-Regelsatzes einen erweiterten Zugriff von dem Betreibernetz auf das Steuernetz zuzulassen, die Eingriffserkennungseinheit ausgebildet, auf Basis des zweiten Erkennungsregelsatzes einen erweiterten Zugriff von dem Betreibernetz auf das Steuernetz zuzulassen und/oder die Eingriffsverhinderungseinheit ausgebildet, auf Basis des zweiten Verhinderungsregelsatzes einen erweiterten Zugriff von dem Betreibernetz auf das Steuernetz zuzulassen. Die Formulierung "erweiterter Zugriff" versteht der Fachmann dahingehend, dass vorbestimmte Daten, die anhand des ersten Firewall-Regelsatzes von der Firewall-Einheit und/oder anhand des ersten Verhinderungsregelsatzes verworfen werden, anhand des dritten Firewall-Regelsatzes von der Firewall-Einheit und/oder des zweiten Verhinderungsregelsatzes von der Eingriffsverhinderungseinheit weitergegeben werden. Auf diese Weise kann besonders einfach und sicher eine Übertragung von Daten zwischen dem ersten und zweiten Netz in Abhängigkeit des Fahrzeugzustands gesteuert werden.

Bei einer bevorzugten Weiterbildung der Gateway-Vorrichtung ist das Bereitstellen des dritten Firewall-Regelsatzes, zweiten Erkennungsregelsatzes und/oder zweiten Verhinderungsregelsatzes ausschließlich von einer aus dem Steuernetz stammenden Information, insbesondere der vorstehend beschriebene Zustandsinformation, auslösbar. Eine derartige Ausgestaltung hat den Vorteil, dass ein Schutz des Steuernetzes dadurch erzielt wird, dass ausschließlich eine von dem Steuernetz stammende Information eine Änderung der Datenübertragung in Richtung Steuernetz auslösen kann. Mit anderen Worten: Ein erweiterter Zugriff auf das Steuernetz kann ausschließlich von dem Steuernetz selbst ausgelöst werden.

Vorzugsweise wird die von der Gateway-Vorrichtung empfangene Zustandsinformation von der Fahrzeugzustand-Verwaltungseinheit verarbeitet.

Bei einer weiteren bevorzugten Ausführungsform umfasst die Gateway-Vorrichtung eine Anwendungsschicht-Gateway-Einheit, welche ausgebildet ist, die Daten zwischen dem ersten und zweiten Netz zu vermitteln. Der Fachmann versteht den Begriff "Anwendungsschicht-Gateway-Einheit" vorzugsweise als eine Einheit, welche zur Weiterleitung, Analyse und/oder Konvertierung von Daten auf der Anwendungsebene des OSI-Referenzmodells dient. Weiter vorzugsweise wird die Übertragung von Daten mittels der Anwendungsschicht-Gateway-Einheit derart gesteuert, dass eine Rückwirkungsfreiheit zwischen einer Quelle der Daten (erstes bzw. zweites Netz) und einer Senke der Daten (zweites bzw. erstes Netz) erzielt wird.

Die Anwendungsschicht-Gateway-Einheit wird nach dem fachmännischen Verständnis vorzugsweise von einem Application-Layer-Gateway gebildet. Weiter vorzugsweise ist die Anwendungsschicht-Gateway-Einheit datentechnisch mit dem System-Server (z.B. SP SR) auf der dem Steuernetz zugewandten Seite verbunden. Weiter vorzugsweise ist die Anwendungsschicht-Gateway-Einheit datentechnisch mit einem Server des Betreibernetzes verbunden.

Der Fachmann versteht den Begriff "vermitteln" vorzugsweise dahingehend, dass die Anwendungsschicht-Gateway-Einheit eine Vermittlungsinstanz repräsentiert, welche als Stellvertreter Daten, die für eine Übertragung zwischen dem ersten und zweiten Netz vorgesehen sind, weitergibt. So besteht vorzugsweise keine unmittelbare datentechnische Verbindung zwischen dem ersten und zweiten Netz. Stattdessen ist die Anwendungsschicht-Gateway-Einheit datentechnisch mittels einer ersten Verbindung mit dem Steuernetz und mittels einer zweiten Verbindung mit dem Betreibernetz verbunden.

Die Erfindung betrifft ferner ein Kommunikationsverfahren für ein Schienenfahrzeug, umfassend: Übertragen von Daten zwischen einem ersten Netz des Fahrzeugs und einem zweiten Netz des Fahrzeugs und Steuern der Übertragung zwischen dem ersten und zweiten Netz mittels einer Gateway-Vorrichtung in Abhängigkeit eines Fahrzeugzustands.

Die Erfindung betrifft ferner ein Kommunikationssystem für ein Schienenfahrzeug, umfassend: ein erstes Netz des Fahrzeugs und ein zweites Netz des Fahrzeugs und eine Gateway-Vorrichtung, welche ausgebildet ist, eine Übertragung von Daten zwischen dem ersten und zweiten Netz in Abhängigkeit eines Fahrzeugzustands zu steuern.

Bei einer bevorzugten Ausführungsform des Kommunikationssystems umfasst das erste Netz ein Betreibernetz und das zweite Netz ein Steuernetz.

Bei einer bevorzugten Weiterbildung des Kommunikationssystems ist das Fahrzeug ausgebildet, als Fahrzeugzustand zumindest einen Wartungszustand, welcher für eine Wartung des Fahrzeugs vorgesehen ist, und einen Betriebszustand, welcher für einen Betrieb des Fahrzeugs vorgesehen ist, einzunehmen, wobei die Gateway-Vorrichtung ausgebildet ist, die Übertragung vorbestimmter Daten von dem Betreibernetz zu dem Steuernetz ausschließlich in dem Wartungszustand zuzulassen.

Bei einer weiteren bevorzugten Weiterbildung des Kommunikationssystems ist die Gateway-Vorrichtung ausgebildet, eine Zustandsinformation, welche für den Fahrzeugzustand repräsentativ ist, von dem Steuernetz zu empfangen und eine Übertragung auf Basis der Zustandsinformation zu steuern.

Bei einer besonders bevorzugten Ausführungsform des Kommunikationssystems umfasst das Betreibernetz einen Drahtlos-Zugangspunkt, welcher einen drahtlosen Zugang zu dem Betreibernetz für ein mobiles Endgerät bereitstellt, wobei die Gateway-Vorrichtung ausgebildet ist, im Wartungszustand einen datentechnischen Zugriff des mobilen Endgeräts auf das Steuernetz zuzulassen. Auf diese Weise kann einem Wartungspersonal beispielsweise mittels eines Wartungs-PCs als Endgerät ermöglicht werden, unter Nutzung des Drahtlos-Zugangspunkts Wartungsaufgaben im Steuernetz durchzuführen. Der Zugang über den Drahtlos-Zugangspunkt erhöht die Handhabbarkeit für das Wartungspersonal.

Bei einer weiteren bevorzugten Ausführungsform des Kommunikationssystems umfasst die Gatewayvorrichtung eine erste Firewall-Einheit, welche für eine dem Betreibernetz zugewandte Datenschnittstelle vorgesehen ist und welche ausgebildet ist, Daten, die für eine Übertragung von dem Betreibernetz zu dem Steuernetz vorgesehen sind, anhand eines ersten Firewall-Regelsatzes weiterzugeben oder zu verwerfen und/oder eine zweite Firewall-Einheit, welche für eine dem Steuernetz zugewandte Datenschnittstelle vorgesehen ist und welche ausgebildet ist, Daten, die für eine Übertragung von dem Steuernetz zu dem Betreibernetz vorgesehen sind, anhand eines zweiten Firewall-Regelsatzes weiterzugeben oder zu verwerfen.

Gemäß einer weiteren bevorzugten Ausführungsform des Kommunikationssystem umfasst die Gateway-Vorrichtung eine Eingriffserkennungseinheit, welche ausgebildet ist, zumindest Daten, die für eine Übertragung von dem Betreibernetz an das Steuernetz vorgesehen sind, zu überwachen.

Nach einer weiteren bevorzugten Ausführungsform des Kommunikationssystems umfasst die Gatewayvorrichtung eine Eingriffsverhinderungseinheit, welche ausgebildet ist, eine Übertragung von Daten, die für einen unerwünschten Zugriff auf das Steuernetz vorgesehen sind, zu verhindern.

Bei einer weiteren bevorzugten Ausführungsform des Kommunikationssystems ist die Eingriffserkennungseinheit ausgebildet, das Überwachen anhand eines ersten Erkennungsregelsatzes auszuführen, und/oder die Eingriffsverhinderungseinheit ausgebildet, das Verhindern anhand eines ersten Verhinderungsregelsatzes auszuführen.

Gemäß einer weiteren bevorzugten Ausführungsform des Kommunikationssystems umfasst die Gatewayvorrichtung eine Begrenzungseinheit, welche ausgebildet ist, einen Datenverkehr zwischen dem Betreibernetz und dem Steuernetz zu begrenzen.

Bei einer weiteren bevorzugten Weiterbildung des Kommunikationssystems umfasst die Gatewayvorrichtung eine Fahrzeugzustand-Verwaltungseinheit, welche ausgebildet ist, der ersten Firewall-Einheit der vorstehend beschriebenen Art einen dritten Firewall-Regelsatz in Abhängigkeit des Fahrzeugzustands bereitzustellen, der Eingriffserkennungseinheit der vorstehend beschriebenen Art einen zweiten Erkennungsregelsatz in Abhängigkeit des Fahrzeugzustands bereitzustellen und/oder der Eingriffsverhinderungseinheit der vorstehenden beschriebenen Art einen zweiten Verhinderungsregelsatz in Abhängigkeit des Fahrzeugzustands bereitzustellen.

Gemäß einer weiteren bevorzugten Weiterbildung des Kommunikationssystem ist die erste Firewall-Einheit ausgebildet ist, auf Basis des dritten Firewall-Regelsatzes einen erweiterten Zugriff von dem Betreibernetz auf das Steuernetz zuzulassen, die Eingriffserkennungseinheit ausgebildet, auf Basis des zweiten Erkennungsregelsatzes einen erweiterten Zugriff von dem Betreibernetz auf das Steuernetz zuzulassen und/oder die Eingriffsverhinderungseinheit ausgebildet, auf Basis des zweiten Verhinderungsregelsatzes einen erweiterten Zugriff von dem Betreibernetz auf das Steuernetz zuzulassen.

Bei einer bevorzugten Weiterbildung des Kommunikationssystems ist das Bereitstellen des dritten Firewall-Regelsatzes, zweiten Erkennungsregelsatzes und/oder zweiten Verhinderungsregelsatzes ausschließlich von einer aus dem Steuernetz stammenden Information, insbesondere der vorstehend beschriebene Zustandsinformation, auslösbar.

Die Erfindung betrifft ferner ein Schienenfahrzeug, welches ein Kommunikationssystem der vorstehend beschriebenen Art umfasst.

Zu Ausführungsformen, Weiterbildungen, Ausführungsdetails und/oder Vorteilen des erfindungsgemäßen Kommunikationsverfahrens sowie des erfindungsgemäßen Kommunikationssystems wird auf die Beschreibung zu den entsprechenden Merkmalen der Gateway-Vorrichtung Bezug genommen.

Ein Ausführungsbeispiel der Erfindung wird nun anhand der Zeichnungen erläutert. Es zeigen:
- Figur 1: einen schematischen Aufbau eines Kommunikationssystems gemäß einem Ausführungsbeispiel der Erfindung,

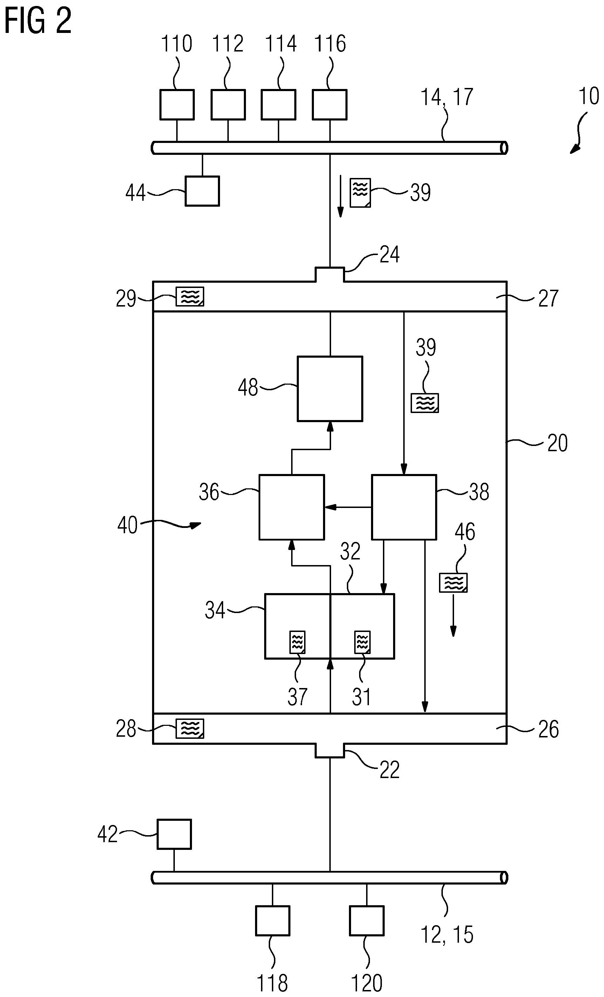

- Figur 2: einen funktionalen Aufbau der in Figur 1 gezeigten Gateway-Vorrichtung, und

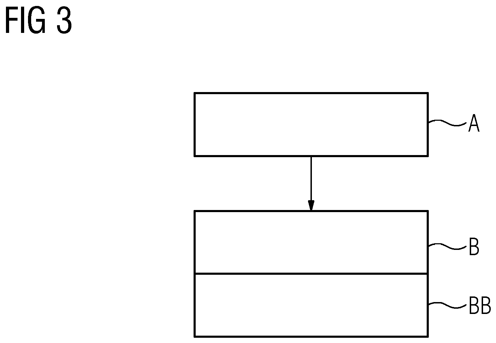

- Figur 3: ein schematisches Ablaufdiagramm eines erfindungsgemäßen Kommunikationsverfahrens gemäß einem Ausführungsbeispiel.

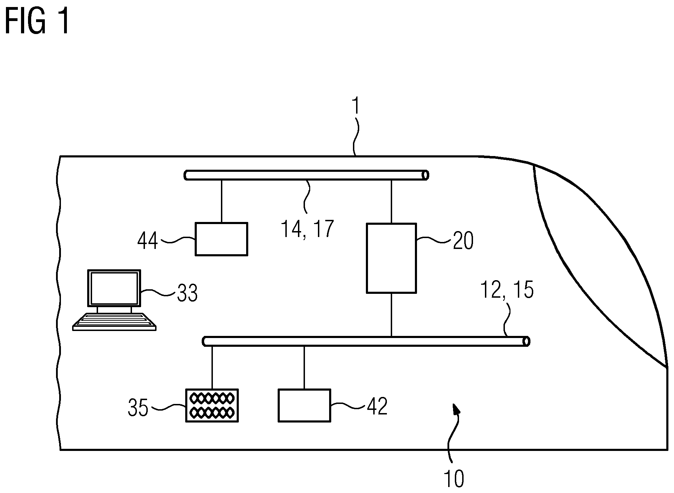

Figur 1 zeigt ein Schienenfahrzeug 1 in einer schematischen Seitenansicht. Das Schienenfahrzeug 1 ist als ein Verband von mehreren Wagen ausgebildet, die miteinander mechanisch gekoppelt sind und eine Zugeinheit bilden. In der betrachteten Ausführung ist das Schienenfahrzeug 1 als sogenannter Triebzug ausgebildet.

Das Schienenfahrzeug 1 weist ein Kommunikationssystem 10 auf, welches zumindest ein erstes Netz 12 und ein zweites Netz 14 umfasst. Das erste Netz 12 ist ein Betreibernetz 15 des Schienenfahrzeugs 1 und das zweite Netz 14 ist ein Steuernetz 17 des Schienenfahrzeugs 1. Das Betreibernetz 15 und das Steuernetz 17 sind jeweils als Ethernet-Netzwerk ausgebildet.

Das Steuernetz 17 ist für einen Betrieb nach dem Profinet-Standard ausgelegt. Das Steuernetz 17 umfasst einen Zugbus, beispielsweise einen Ethernet Train Backbone (ETB), und einen Profinet-Ring, an welchen zumindest eine Subsystemsteuereinheit 110, 112, 114 bzw. 116 angeschlossen ist, die zur Steuerung eines oder mehrerer Betriebsmittel des Fahrzeugs vorgesehen ist. Die Subsystemsteuereinheiten 110, 112, 114 und 116 sind jeweils zur Steuerung einer Aufgabe in Verbindung mit der dem jeweiligen Subsystem zugeordneten Funktionalität vorgesehen. Die Subsystemsteuereinheiten 110, 112, 114 und 116 sind jeweils an das Steuernetz 17 angeschlossen. In dem in Figur 1 gezeigten Ausführungsbeispiel ist als Subsystemsteuereinheit 110 eine Antriebssteuerung, als Subsystemsteuereinheit 112 eine Bremssteuerung, als Subsystemsteuereinheit 114 eine Steuerung des Fahrzeugtürsystems, als Subsystemsteuereinheit 116 eine Steuerung der Zugsicherung dargestellt.

Das Betreibernetz 15 ist physikalisch und/oder logisch von dem Steuernetz 17 getrennt. Beispielsweise ist ein Fahrgastinformationssystem 118 und ein Kameraüberwachungssystem 120 zur Überwachung des Innen- und Außenbereichs des Schienenfahrzeugs an das Betreibernetz 15 datentechnisch angebunden. Die entsprechenden Komponenten des Fahrgastinformationssystems 118 und des Kameraüberwachungssystems 120 sind kommunikationstechnisch über das Betreibernetz 15 miteinander verbunden.

Eine Gateway-Vorrichtung 20 dient zum Übertragen von Daten zwischen dem ersten Netz 12 und dem zweiten Netz 14 gemäß einem Verfahrensschritt A. Die Gateway-Vorrichtung 20 weist eine erste Datenschnittstelle, insbesondere eine Ethernet-Schnittstelle 22, auf, über die eine Anbindung der Gateway-Vorrichtung 20 an das Betreibernetz 15 erfolgt. Die Gateway-Vorrichtung 20 weist eine zweite Datenschnittstelle, insbesondere eine Ethernet-Schnittstelle 24, auf, über die eine Anbindung der Gateway-Vorrichtung 20 an das Steuernetz 17 erfolgt.

Die Gateway-Vorrichtung 20 steuert in einem Verfahrensschritt B die Übertragung von Daten zwischen dem Steuernetz 17 und dem Betreibernetz 15 in Abhängigkeit eines Fahrzeugzustands.

Das Schienenfahrzeug 1 kann als Fahrzeugzustand einen Betriebszustand einnehmen, welcher für einen Betrieb, beispielsweise einen Fahrbetrieb, des Schienenfahrzeugs 1 vorgesehen ist. Zudem kann das Schienenfahrzeug 1 einen Wartungszustand, welcher für eine Wartung des Fahrzeugs vorgesehen ist, einen Inbetriebnahme-Zustand und/oder einen Abstell-Zustand einnehmen. Die Gateway-Vorrichtung lässt in einem Verfahrensschritt BB eine Übertragung vorbestimmter Daten ausgehend von dem Betreibernetz 15 zu dem Steuernetz 17 ausschließlich in dem Wartungszustand zu. Mit anderen Worten: Vorbestimmte Daten, die im Betriebszustand nicht für eine Übertragung ausgehend von dem Betreibernetz 15 zu dem Steuernetz 17 zugelassen werden, können im Wartungszustand übertragen werden.

Der Fahrzeugzustand wird mittels der Gateway-Vorrichtung 20 anhand einer Zustandsinformation 39 ermittelt. Die Zustandsinformation 39 wird von einem System-Server 44 des Steuernetzes 17 ausgesendet und von der Gateway-Vorrichtung 20 empfangen.

Daten, die ausgehend von dem Betreibernetz 15 über die erste Ethernet-Schnittstelle 22 in die Gateway-Vorrichtung 20 eingehen und für eine Übertragung an das Steuernetz 17 vorgesehen sind, werden von einer Firewall-Einheit 26 gefiltert. Das Filtern mittels der Firewall-Einheit 26 erfolgt, indem die Daten anhand eines ersten Firewall-Regelsatzes 28 weitergegeben oder verworfen werden.

Daten, die ausgehend von dem Steuernetz 17 über die zweite Ethernet-Schnittstelle 24 in die Gateway-Vorrichtung 20 eingehen und für eine Übertragung an das Betreibernetz 15 vorgesehen sind, werden von einer Firewall-Einheit 27 gefiltert. Das Filtern mittels der Firewall-Einheit 27 erfolgt, indem die Daten anhand eines zweiten Firewall-Regelsatzes 29 weitergegeben oder verworfen werden.

Daten, die ausgehend von dem Betreibernetz 15 für eine Übertragung an das Steuernetz 17 vorgesehen sind und die Firewall-Einheit 26 passieren, werden von einer Eingriffserkennungseinheit 32, welche als Intrusion-Detection-System ausgebildet ist, und einer Eingriffsverhinderungseinheit 34, welche als Intrusion-Prevention-System ausgebildet ist, empfangen.

Die Eingriffserkennungseinheit 32 filtert bzw. verwirft einen Datenverkehr, wenn sie eine Verletzung eines vorgegebenen Musters und/oder einer Regel erkennt. Die Eingriffserkennungseinheit 32 überwacht Daten anhand eines ersten Erkennungsregelsatzes 31. Wird eine vergleichsweise signifikante Verletzung eines vorgegebenen Musters und/oder einer Regel von der Eingriffserkennungseinheit 32 erkannt, wird zudem die Ethernet-Schnittstelle 22 zum Betreibernetz 15 hin abgeschaltet.

Die Eingriffsverhinderungseinheit 34 filtert bzw. verwirft Daten von einem Absender, wenn diese Daten eine vorgegebene Eigenschaft und/oder Vorgabe nicht erfüllen. Die Eingriffsverhinderungseinheit 32 verhindert eine Übertragung von Daten anhand eines ersten Verhinderungsregelsatzes 37. Empfangene Daten, insbesondere über eine OPC-Verbindung (OPC: Open Platform Communications) übertragene Daten, werden im Wege der Deep Packet Inspection auf eine Einhaltung von Vorgaben analysiert. Desweiteren analysiert die Eingriffsverhinderungseinheit 34 empfangene Daten, die über eine HTTP-Verbindung übertragen werden. Eine HTTP-Verbindung wird beispielsweise aufgebaut, wenn das Fahrzeug einen Wartungszustand einnimmt. Die HTTP-Verbindung dient in einem Wartungszustand beispielsweise dazu, Werkstattmeldungen abzurufen. Der Abruf wird beispielsweise von einem Wartungspersonal initiiert, welches mittels eines Wartungs-PCs 33 über eine Zugangsschnittstelle 35 am Betreibernetz 15 auf das Steuernetz 17 zugreift. Zudem kann die HTTP-Verbindung dazu dienen, eine Softwareverteilung für Komponenten, wie einen System-Server und/oder eine Subsystemsteuereinheit 110, 112, 114 bzw. 116, durchzuführen.

Die Eingriffserkennungseinheit 32 sowie die Eingriffsverhinderungseinheit 34 sind ausgebildet, ein Ereignis, welches einen Eingriff repräsentiert, zu protokollieren und zudem eine Werkstattmeldung zu erzeugen und auszusenden, die für ein Auslesen im Rahmen einer Wartung vorgesehen ist, und außerdem eine Betriebsmeldung zu erzeugen und auszusenden, welche für ein Auslesen während eines Betriebs des Schienenfahrzeugs 1 vorgesehen ist. Die Betriebsmeldung kann einem Schienenfahrzeugführer oder -begleiter mittels einer Mensch-Maschine-Schnittstelle, welche eine Anzeige aufweist, bereitgestellt werden.

Daten, die ausgehend von dem Betreibernetz 15 für eine Übertragung an das Steuernetz 17 vorgesehen sind und die Eingriffserkennungseinheit 32 und einer Eingriffsverhinderungseinheit 34 passieren, werden von einer Anwendungsschicht-Gateway-Einheit 36 empfangen. Die Anwendungsschicht-Gateway-Einheit 36 ist ausgebildet, Daten auf der Anwendungsebene des OSI-Referenzmodells zu analysieren und gegebenenfalls zu konvertieren und weiterzuleiten. Die Anwendungsschicht-Gateway-Einheit 36 ist als Application Layer Gateway ausgebildet.

Die Anwendungsschicht-Gateway-Einheit 36 hält eine Verbindung zu einem Train-Server 42 des Betreibernetzes 15 und eine weitere Verbindung zu dem System-Server 44 des Steuernetzes 17 und dient als Vermittlungsinstanz 40 zwischen Betreibernetz 15 und Steuernetz 17. Mit anderen Worte: Eine unmittelbare datentechnische Verbindung zwischen dem Train-Server 42 und dem System-Server 44 besteht nicht. Beispielsweise wird eine datentechnische Verbindung des Train-Servers 42 für eine Übertragung von Daten zu dem Steuernetz 17 an der Anwendungsschicht-Gateway-Einheit 36 terminiert und eine neue datentechnische Verbindung mit dem System-Server 44 initiiert.

Eine Fahrzeugzustand-Verwaltungseinheit 38 der Gateway-Vorrichtung 20 ist ausgebildet, Prozessdaten bzw. Prozesssignale aus dem Steuernetz 17 zu empfangen. Auf Basis der Prozessdaten bzw. Prozesssignale kann die Fahrzeugzustand-Verwaltungseinheit 38 ermitteln, ob das Schienenfahrzeug 1 als Fahrzeugzustand einen Wartungszustand einnimmt oder nicht. Prozessdaten bzw. Prozesssignale, welche das Bereitstellen des Firewall-Regelsatzes beeinflussen, werden durch die Fahrzeugzustands-Verwaltungseinheit 38 ausschließlich von dem Steuernetz 17 empfangen.

Insbesondere empfängt die Fahrzeugzustand-Verwaltungseinheit 38 von dem Systemserver 44 des Steuernetzes 17 eine Zustandsinformation 39, welche den Fahrzeugzustand repräsentiert. Auf Basis der Zustandsinformation 39 ermittelt die Fahrzeugzustand-Verwaltungseinheit 38 den Fahrzeugzustand. Wird als Fahrzeugzustand der Wartungszustand ermittelt, stellt die Fahrzeugzustands-Verwaltungseinheit 38 der Firewall-Einheit 26 einen dritten Firewall-Regelsatz 46 zur Verfügung, auf dessen Basis ein erweiterter Zugriff von dem Betreibernetz 15 auf das Steuernetz 17 ermöglicht wird.

Mit anderen Worte: Während das Schienenfahrzeug 1 als Fahrzeugzustand den Betriebszustand einnimmt, nutzt die Firewall-Einheit 26 den Firewall-Regelsatz 28 zum Filtern von Daten. Wenn das Schienenfahrzeug 1 den Wartungszustand einnimmt, stellt die Fahrzeugzustands-Verwaltungseinheit 38 den dritten Firewall-Regelsatz 46 an die Firewall-Einheit 26 zur Verfügung. Anhand des dritten Firewall-Regelsatzes 46 filtert die Firewall-Einheit 26 die Daten.

Auch der Eingriffserkennungseinheit 32 bzw. der Eingriffsverhinderungseinheit 34 kann mittels der Fahrzeugstand-Verwaltungseinheit 38 ein geänderter Regelsatz, beispielsweise ein zweiter Erkennungsregelsatz bzw. ein zweiter Verhinderungsregelsatz, für den Wartungszustand zur Verfügung gestellt werden. Alternativ oder zusätzlich kann ein von der Firewall-Einheit 27, der Eingriffserkennungseinheit 32 sowie der Eingriffsverhinderungseinheit 34 verwendeter Regelsatz für den Wartungszustand durch die Fahrzeugzustand-Verwaltungseinheit 38 deaktiviert werden, um einen erweiterten Zugriff von dem Betreibernetz 15 auf das Steuernetz 17 zuzulassen.

Beispielsweise wird durch das Bereitstellen eines dritten Regelsatzes 46 an die Firewall-Einheit 27 und des zweiten Erkennungsregelsatzes an die Eingriffserkennungseinheit 32 sowie des zweiten Verhinderungsregelsatzes an die Eingriffsverhinderungseinheit 34 ermöglicht, dass Wartungspersonal mittels eines Wartungs-PCs 33 (PC: Personal Computer) über eine Zugangsschnittstelle des Betreibernetzes 15 einen Zugriff auf das Steuernetz 17 erhält.

Die Gateway-Einrichtung 38 umfasst zudem eine Begrenzungseinheit 48, welche ausgebildet ist, einen Datenverkehr zwischen dem Betreibernetz 15 und dem Steuernetz 17 hinsichtlich einer pro Zeiteinheit übertragenen Datenmenge (d.h. Traffic) zu begrenzen.

## Patentansprüche

1. Gateway-Vorrichtung für ein Fahrzeug, welches ein Schienenfahrzeug (1) ist, welche ausgebildet ist, eine Übertragung von Daten zwischen einem ersten Netz (12) des Fahrzeugs und einem zweiten Netz (14) des Fahrzeugs in Abhängigkeit eines Fahrzeugzustands zu steuern,
wobei das erste Netz (12) ein Betreibernetz (15) und das zweite Netz (14) ein Steuernetz (17) umfasst,
wobei das Steuernetz eine oder mehrere Komponenten zur Fahrzugsteuerung umfasst und das Betreibernetz ein physikalisch und/oder logisch von dem Steuernetz getrenntes Netz ist,
das Fahrzeug ausgebildet ist, als Fahrzeugzustand zumindest
- einen Wartungszustand, welcher für eine Wartung des Fahrzeugs vorgesehen ist, und
- einen Betriebszustand, welcher für einen Betrieb des Fahrzeugs vorgesehen ist,
einzunehmen, und
die Gateway-Vorrichtung (20) ausgebildet ist, die Übertragung vorbestimmter Daten von dem Betreibernetz (15) zu dem Steuernetz (17) ausschließlich in dem Wartungszustand zuzulassen.

2. Gateway-Vorrichtung nach Anspruch 1, welche ausgebildet ist, eine Zustandsinformation (39), welche für den Fahrzeugzustand repräsentativ ist, von dem Steuernetz (17) zu empfangen und die Übertragung auf Basis der Zustandsinformation (39) zu steuern.

3. Gateway-Vorrichtung nach Anspruch 1 oder 2:
eine erste Firewall-Einheit (26), welche für eine dem Betreibernetz (15) zugewandte Datenschnittstelle (22) vorgesehen ist und welche ausgebildet ist, Daten, die für eine Übertragung von dem Betreibernetz (15) zu dem Steuernetz (17) vorgesehene sind, anhand eines ersten Firewall-Regelsatzes (28) weiterzugeben oder zu verwerfen und/oder
eine zweite Firewall-Einheit (27), welche für eine dem Steuernetz (17) zugewandte Datenschnittstelle (24) vorgesehen ist und welche ausgebildet ist, Daten, die für eine Übertragung von dem Steuernetz (17) zu dem Betreibernetz (15) vorgesehen sind, anhand eines zweiten Firewall-Regelsatzes (29) weiterzugeben oder zu verwerfen.

4. Gateway-Vorrichtung nach wenigstens einem der vorhergehenden Ansprüche 1 bis 3 umfassend:
eine Eingriffserkennungseinheit (32), welche ausgebildet ist, zumindest Daten, die für eine Übertragung von dem Betreibernetz (15) zu dem Steuernetz (17) vorgesehen sind, zu überwachen.

5. Gateway-Vorrichtung nach wenigstens einem der vorhergehenden Ansprüche 1 bis 4 umfassend:
eine Eingriffsverhinderungseinheit (34), welche ausgebildet ist, eine Übertragung von Daten, die für einen unerwünschten Zugriff auf das Steuernetz (17) vorgesehen sind, zu verhindern.

6. Gateway-Vorrichtung nach wenigstens einem der vorhergehenden Ansprüche 4 und/oder 5,
wobei die Eingriffserkennungseinheit (32) ausgebildet ist, das Überwachen anhand eines ersten Erkennungsregelsatzes (31) auszuführen, und/oder
wobei die Eingriffsverhinderungseinheit (34) ausgebildet ist, das Verhindern anhand eines ersten Verhinderungsregelsatzes (37) auszuführen.

7. Gateway-Vorrichtung nach wenigstens einem der vorhergehenden Ansprüche 1 bis 6 umfassend:
eine Begrenzungseinheit (48), welche ausgebildet ist, einen Datenverkehr zwischen dem Betreibernetz (15) und dem Steuernetz (17) zu begrenzen.

8. Gateway-Vorrichtung nach wenigstens einem der vorhergehenden Ansprüche umfassend:
eine Fahrzeugzustand-Verwaltungseinheit (38), welche ausgebildet ist,
- der ersten Firewall-Einheit (26) nach Anspruch 3 einen dritten Firewall-Regelsatz (46) in Abhängigkeit des Fahrzeugzustands bereitzustellen,
- der Eingriffserkennungseinheit (32) nach Anspruch 6 einen zweiten Erkennungsregelsatz in Abhängigkeit des Fahrzeugzustands bereitzustellen und/oder
- der Eingriffsverhinderungseinheit (34) nach Anspruch 6 einen zweiten Verhinderungsregelsatz in Abhängigkeit des Fahrzeugzustands bereitzustellen.

9. Gateway-Vorrichtung nach Anspruch 8,
wobei
- die erste Firewall-Einheit (26) ausgebildet ist, auf Basis des dritten Firewall-Regelsatzes (46) einen erweiterten Zugriff von dem Betreibernetz (15) auf das Steuernetz (17) zuzulassen,
- die Eingriffserkennungseinheit (32) ausgebildet ist, auf Basis des zweiten Erkennungsregelsatzes einen erweiterten Zugriff von dem Betreibernetz (15) auf das Steuernetz (17) zuzulassen und/oder
- die Eingriffsverhinderungseinheit (34) ausgebildet ist, auf Basis des zweiten Verhinderungsregelsatzes einen erweiterten Zugriff von dem Betreibernetz (15) auf das Steuernetz (17) zuzulassen.

10. Gateway-Vorrichtung nach Anspruch 8 oder 9,
wobei das Bereitstellen des dritten Firewall-Regelsatzes (46), zweiten Erkennungsregelsatzes und/oder zweiten Verhinderungsregelsatzes ausschließlich von einer aus dem Steuernetz (16) stammenden Information, insbesondere der Zustandsinformation nach Anspruch 2, auslösbar ist.

11. Gateway-Vorrichtung nach wenigstens einem der vorhergehenden Ansprüche, welche eine Anwendungsschicht-Gateway-Einheit (36) umfasst, welche ausgebildet ist, die Daten zwischen dem ersten und zweiten Netz (12, 14) zu vermitteln.

12. Kommunikationsverfahren für ein Fahrzeug, welches ein Schienenfahrzeug (1) ist, umfassend:
Übertragen (A) von Daten zwischen einem ersten Netz (12) des Fahrzeugs und einem zweiten Netz (14) des Fahrzeugs und Steuern (B) der Übertragung zwischen dem ersten und zweiten Netz (12, 14) mittels einer Gateway-Vorrichtung (20) in Abhängigkeit eines Fahrzeugzustands,
wobei das erste Netz (12) ein Betreibernetz (15) und das zweite Netz (14) ein Steuernetz (17) umfasst, wobe**i**
das Steuernetz eine oder mehrere Komponenten zur Fahrzugsteuerung umfasst und das Betreibernetz ein physikalisch und/oder logisch von dem Steuernetz getrenntes Netz ist,
das Fahrzeug ausgebildet ist, als Fahrzeugzustand zumindest
- einen Wartungszustand, welcher für eine Wartung des Fahrzeugs vorgesehen ist, und
- einen Betriebszustand, welcher für einen Betrieb des Fahrzeugs vorgesehen ist,
einzunehmen, und
die Gateway-Vorrichtung (20) ausgebildet ist, die Übertragung vorbestimmter Daten von dem Betreibernetz (15) zu dem Steuernetz (17) ausschließlich in dem Wartungszustand zuzulassen.

13. Kommunikationssystem für ein Fahrzeug, welches ein Schienenfahrzeug (1) ist, umfassend:
ein erstes Netz (12) des Fahrzeugs und ein zweites Netz (14) des Fahrzeugs und
eine Gateway-Vorrichtung (20), welche ausgebildet ist, eine Übertragung von Daten zwischen dem ersten und zweiten Netz (12, 14) in Abhängigkeit eines Fahrzeugzustands zu steuern, wobei das erste Netz (12) ein Betreibernetz (15) und das zweite Netz (14) ein Steuernetz (17) umfasst,
wobei das Steuernetz eine oder mehrere Komponenten zur Fahrzugsteuerung umfasst und das Betreibernetz ein physikalisch und/oder logisch von dem Steuernetz getrenntes Netz ist,
das Fahrzeug ausgebildet ist, als Fahrzeugzustand zumindest
- einen Wartungszustand, welcher für eine Wartung des Fahrzeugs vorgesehen ist, und
- einen Betriebszustand, welcher für einen Betrieb des Fahrzeugs vorgesehen ist,
einzunehmen, und
die Gateway-Vorrichtung (20) ausgebildet ist, die Übertragung vorbestimmter Daten von dem Betreibernetz (15) zu dem Steuernetz (17) ausschließlich in dem Wartungszustand zuzulassen.

14. Schienenfahrzeug, welches ein Kommunikationssystem nach Anspruch 13 aufweist.

## Claims

1. Gateway device for a vehicle, which is a rail vehicle (1), which is designed to control a transmission of data between a first network (12) of the vehicle and a second network (14) of the vehicle as a function of the state of the vehicle,
wherein the first network (12) comprises an operator network (15) and the second network (14) comprises a control network (17),
wherein
the control network comprises one or more components for controlling the vehicle and the operator network is a network that is physically and/or logically separated from the control network,
the vehicle is designed to adopt as a state of the vehicle at least
- a maintenance state, which is intended for the maintenance of the vehicle, and
- an operating state, which is intended for the operation of the vehicle,
and
the gateway device (20) is designed to allow the transmission of predetermined data from the operator network (15) to the control network (17) exclusively in the maintenance state.

2. Gateway device according to claim 1, which is designed to receive state information (39) representing the state of the vehicle from the control network (17) and to control the transmission on the basis of the state information (39).

3. Gateway device according to claim 1 or 2:
a first firewall unit (26), which is intended for a data interface (22) facing the operator network (15) and which is designed to forward or discard data intended for transmission from the operator network (15) to the control network (17) using a first firewall ruleset (28) and/or
a second firewall unit (27), which is intended for a data interface (24) facing the control network (17) and which is designed to forward or discard data intended for transmission from the control network (17) to the operator network (15) using a second firewall ruleset (29).

4. Gateway device according to at least one of the preceding claims 1 to 3 comprising:
an intrusion-detection unit (32), which is designed to monitor at least data intended for transmission from the operator network (15) to the control network (17).

5. Gateway device according to at least one of the preceding claims 1 to 4 comprising:
an intrusion-prevention unit (34), which is designed to prevent transmission of data intended for an unwanted access to the control network (17).

6. Gateway device according to at least one of the preceding claims 4 and/or 5,
wherein the intrusion-detection unit (32) is designed to carry out the monitoring using a first detection ruleset (31),
and/or
wherein the intrusion-prevention unit (34) is designed to carry out the prevention using a first prevention ruleset (37).

7. Gateway device according to at least one of the preceding claims 1 to 6 comprising:
a limiting unit (48), which is designed to limit data traffic between the operator network (15) and the control network (17).

8. Gateway device according to at least one of the preceding claims comprising:
a vehicle-state managing unit (38), which is designed
- to provide the first firewall unit (26) according to claim 3 with a third firewall ruleset (46) as a function of the state of the vehicle,
- to provide the intrusion-detection unit (32) according to claim 6 with a second detection ruleset as a function of the state of the vehicle and/or
- to provide the intrusion-prevention unit (34) according to claim 6 with a second prevention ruleset as a function of the state of the vehicle.

9. Gateway device according to claim 8,
wherein
- the first firewall unit (26) is designed to allow, on the basis of the third firewall ruleset (46), extended access from the operator network (15) to the control network (17),
- the intrusion-detection unit (32) is designed to allow, on the basis of the second detection ruleset, extended access from the operator network (15) to the control network (17) and/or
- the intrusion-prevention unit (34) is designed to allow, on the basis of the second prevention ruleset, extended access from the operator network (15) to the control network (17).

10. Gateway device according to claim 8 or 9,
wherein the provision of the third firewall ruleset (46), second detection ruleset and/or second prevention ruleset can be initiated exclusively by information originating from the control network (16), in particular the state information according to claim 2.

11. Gateway device according to at least one of the preceding claims, which comprises an application-layer gateway unit (36), which is designed to convey the data between the first and second network (12, 14).

12. Communication method for a vehicle, which is a rail vehicle (1), comprising:
transmitting (A) data between a first network (12) of the vehicle and a second network (14) of the vehicle and
controlling (B) the transmission between the first and second network (12, 14) by means of a gateway device (20) as a function of the state of the vehicle,
wherein the first network (12) comprises an operator network (15) and the second network (14) comprises a control network (17),
wherein
the control network comprises one or more components for controlling the vehicle and the operator network is a network that is physically and/or logically separated from the control network,
the vehicle is designed to adopt as a state of the vehicle at least
- a maintenance state, which is intended for the maintenance of the vehicle and
- an operating state, which is intended for the operation of the vehicle,
and
the gateway device (20) is designed to allow the transmission of predetermined data from the operator network (15) to the control network (17) exclusively in the maintenance state.

13. Communication system for a vehicle, which is a rail vehicle (1), comprising:
a first network (12) of the vehicle and a second network (14) of the vehicle and
a gateway device (20), which is designed to control transmission of data between the first and second network (12, 14) as a function of the state of the vehicle,
wherein the first network (12) comprises an operator network (15) and the second network (14) comprises a control network (17),
wherein
the control network comprises one or more components for controlling the vehicle and the operator network is a network that is physically and/or logically separated from the control network,
the vehicle is designed to adopt as a state of the vehicle at least
- a maintenance state, which is intended for the maintenance of the vehicle and
- an operating state, which is intended for the operation of the vehicle,
and
the gateway device (20) is designed to allow the transmission of predetermined data from the operator network (15) to the control network (17) exclusively in the maintenance state.

14. Rail vehicle, which has a communication system according to claim 13.

## Revendications

1. Dispositif de gateway pour un véhicule, lequel est un véhicule (1) ferroviaire, qui est constitué pour commander une transmission de données entre un premier réseau (12) et un deuxième réseau (14) du véhicule en fonction d'un état du véhicule,
dans lequel le premier réseau (12) comprend un réseau (15) d'opérateur et le deuxième réseau (14) un réseau (17) de commande, dans lequel le réseau de commande comprend un ou plusieurs composants pour la commande du véhicule et le réseau d'opérateur est un réseau séparé physiquement et/ou logiquement du réseau de commande,
le véhicule est constitué pour prendre, comme état du véhicule, au moins
- un état d'entretien, qui est prévu pour un entretien du véhicule, et
- un état de fonctionnement, qui est prévu pour un fonctionnement du véhicule, et
le dispositif (20) de gateway est constitué pour autoriser la transmission de données déterminées à l'avance du réseau (15) d'opérateur au réseau (17) de commande exclusivement dans l'état d'entretien.

2. Dispositif de gateway suivant la revendication 1, qui est constitué pour recevoir du réseau (17) de commande une information (39) d'état, laquelle est représentative de l'état du véhicule, et pour commander la transmission sur la base de l'information (39) d'état.

3. Dispositif de gateway suivant la revendication 1 ou 2 :
une première unité (26) de firewall, qui est prévue pour une interface (22) de données tournée vers le réseau (15) d'opérateur et qui est constituée pour acheminer ou rejeter, à l'aide d'un premier ensemble (28) de règles de firewall, des données, qui sont prévues pour une transmission du réseau (15) d'opérateur au réseau (17) de commande, et/ou
une deuxième unité (27) de firewall, qui est prévue pour une interface (24) de données tournée vers le réseau (17) de commande et qui est constituée pour acheminer ou rejeter, à l'aide d'un deuxième ensemble (29) de règles de firewall, des données, qui sont prévues pour une transmission du réseau (17) de commande au réseau (15) d'opérateur.

4. Dispositif de gateway suivant au moins l'une des revendications 1 à 3 précédentes comprenant :
une unité (32) d'identification d'intervention, qui est constituée pour contrôler au moins des données, qui sont prévues pour une transmission du réseau (15) d'opérateur au réseau (17) de commande.

5. Dispositif de gateway suivant au moins l'une des revendications 1 à 4 précédentes comprenant :
une unité (34) empêchant une intrusion, qui est constituée pour empêcher une transmission de données, qui sont prévues pour un accès non souhaité au réseau (17) de commande.

6. Dispositif de gateway suivant au moins l'une des revendications 4 et/ou 5 précédentes,
dans lequel l'unité (32) d'identification d'intrusion est constituée pour exécuter le contrôle au moyen d'un premier ensemble (31) de règles d'identification, et/ou
dans lequel l'unité (34) empêchant une intrusion est constituée pour exécuter l'empêchement à l'aide d'un premier ensemble (37) de règles d'empêchement.

7. Dispositif de gateway suivant au moins l'une des revendications 1 à 6 précédentes comprenant :
une unité (48) de limitation, qui est constituée pour limiter un trafic de données entre le réseau (15) d'opérateur et le réseau (17) de commande.

8. Dispositif de gateway suivant au moins l'une des revendications précédentes comprenant :
une unité (38) de gestion d'état du véhicule, qui est constituée pour,
- mettre à disposition de la première unité (26) de firewall suivant la revendication 3 un troisième ensemble (46) de règles de firewall en fonction de l'état du véhicule,
- mettre à disposition de l'unité (32) d'identification d'intrusion suivant la revendication 6 un deuxième ensemble de règles d'identification en fonction de l'état du véhicule, et/ou
- mettre à disposition de l'unité (34) empêchant une intervention suivant la revendication 6 un deuxième ensemble de règles d'empêchement en fonction de l'état du véhicule.

9. Dispositif de gateway suivant la revendication 8,
dans lequel
- la première unité (26) de firewall est constituée pour, sur la base du troisième ensemble (46) de règles de firewall, autoriser un accès élargi du réseau (15) d'opérateur au réseau (17) de commande,
- l'unité (32) d'identification d'intrusion est constituée pour, sur la base du deuxième ensemble de règles d'identification, autoriser un accès élargi du réseau (15) d'opérateur au réseau (17) de commande, et/ou
- l'unité (34) empêchant une intrusion est constituée pour, sur la base du deuxième ensemble de règles d'empêchement, autoriser un accès élargi du réseau (15) d'opérateur au réseau (17) de commande.

10. Dispositif de gateway suivant la revendication 8 ou 9,
dans lequel la mise à disposition du troisième ensemble (46) de règles firewall, du deuxième ensemble de règles d'identification et/ou du deuxième ensemble de règles d'empêchement peut être déclenchée exclusivement par une information provenant du réseau (16) de commande, en particulier par l'information d'état suivant la revendication 2.

11. Dispositif de gateway suivant au moins l'une des revendications précédentes, qui comprend une unité (36) de gateway de couche d'application, qui est constituée pour transmettre des données entre le premier et le deuxième réseau (12, 14).

12. Procédé de communication pour un véhicule, lequel est un véhicule (1) ferroviaire, comprenant :
transmission (A) de données entre un premier réseau (12) du véhicule et un deuxième réseau (14) du véhicule et
commande (B) de la transmission entre le premier et le deuxième réseau (12, 14) au moyen d'un dispositif (20) de gateway en fonction d'un état du véhicule,
dans lequel le premier réseau (12) comprend un réseau (15) d'opérateur et le deuxième réseau (14) un réseau (17) de commande, dans lequel le réseau de commande comprend un ou plusieurs composants pour la commande du véhicule et le réseau d'opérateur est un réseau séparé physiquement et/ou logiquement du réseau de commande,
le véhicule est constitué pour prendre, comme état du véhicule, au moins
- un état d'entretien, qui est prévu pour un entretien du véhicule, et
- un état de fonctionnement, qui est prévu pour un fonctionnement du véhicule, et
le dispositif (20) de gateway est constitué pour autoriser la transmission de données déterminées à l'avance du réseau (15) d'opérateur au réseau (17) de commande exclusivement dans l'état d'entretien.

13. Système de communication pour un véhicule, lequel est un véhicule (1) ferroviaire, comprenant :
un premier réseau (12) du véhicule et un deuxième réseau (14) du véhicule, et
un dispositif (20) de gateway, qui est constitué pour commander une transmission de données entre le premier et le deuxième réseau (12, 14) en fonction d'un état du véhicule, dans lequel le premier réseau (12) comprend un réseau (15) d'opérateur et le deuxième réseau (14) un réseau (17) de commande,
dans lequel le réseau de commande comprend un ou plusieurs composants pour la commande du véhicule et le réseau d'opérateur est un réseau séparé physiquement et/ou logiquement du réseau de commande,
le véhicule est constitué pour prendre, comme état du véhicule, au moins
- un état d'entretien, qui est prévu pour un entretien du véhicule, et
- un état de fonctionnement, qui est prévu pour un fonctionnement du véhicule, et
le dispositif (20) de gateway est constitué pour autoriser la transmission de données déterminées à l'avance du réseau (15) d'opérateur au réseau (17) de commande exclusivement dans l'état d'entretien.

14. Véhicule ferroviaire, qui a un système de communication suivant la revendication 13.
